# DEMANDE DE BREVET EUROPEEN

(11) **EP 4 610 022 A1**
(43) Date de publication de la demande: **03.09.2025**
(21) Numéro de dépôt: 25158209.4
(22) Date de dépôt: 17.02.2025
(51) Int. Cl.: B29C 49/68, B29C 49/64, B29C 35/08, B29L 31/00

(54) **UNITÉ DE TRAITEMENT THERMIQUE DE PRÉFORMES COMPRENANT UN ÉLÉMENT DE BLOCAGE D'UN RAYONNEMENT VERS LE COL DES PRÉFORMES**

(30) Priorité: 29.02.2024 FR 2402012
(71) Demandeur: Sidel Participations, 76930 Octeville-sur-Mer (FR)
(72) Inventeur: MORIN, Stéphane, 76930 Octeville-sur-Mer (FR); MOUCHELET, Marc, 76930 Octeville-sur-Mer (FR); LE PECHOUR, Anthony, 76930 Octeville-sur-Mer (FR)
(74) Mandataire: Sidel Group

(57) **Abrégé**

Unité de traitement thermique de préformes comprenant un élément de blocage d'un rayonnement vers le col des préformes

L'unité de traitement thermique comprend :
- une première paroi (26), comprenant un premier élément de chauffage (28), et une deuxième paroi (30), comprenant un deuxième élément de chauffage (32),
- un premier système de préhension et de déplacement (34) d'une première pluralité de préformes (1) sur une première rangée (R1),
- un deuxième système de préhension et de déplacement (36) d'une deuxième pluralité de préformes (1) sur une deuxième rangée (R2).

L'unité de traitement thermique comprend un élément de blocage (37) s'étendant entre les première et deuxième rangées (R1, R2) afin de bloquer un rayonnement émis par le premier élément de chauffage (28), respectivement le deuxième élément de chauffage (32), vers le deuxième système de préhension et de déplacement (36), respectivement vers le premier système de préhension et de déplacement (34).

## Description

La présente invention concerne une unité de traitement thermique de préformes d'une installation de fabrication de récipients du type comprenant :
une enceinte délimitée par une première paroi et une deuxième paroi s'étendant de part et d'autre de l'enceinte selon une direction transversale, la première paroi comprenant au moins un premier élément de chauffage et la deuxième paroi comprenant au moins un deuxième élément de chauffage,
un premier système de préhension et de déplacement d'une première pluralité de préformes sur une première rangée adjacente à la première paroi, ledit premier système de préhension et de déplacement étant agencé pour coopérer avec un col de chaque préforme de la première pluralité de préformes pour déplacer lesdites préformes selon un trajet de circulation prédéfini s'étendant selon une direction longitudinale, sensiblement perpendiculaire à la direction transversale,
un deuxième système de préhension et de déplacement d'une deuxième pluralité de préformes sur une deuxième rangée adjacente à la deuxième paroi, ledit deuxième système de préhension et de déplacement étant agencé pour coopérer avec un col de chaque préforme de la deuxième pluralité de préformes pour déplacer lesdites préformes selon le trajet de circulation.

Une telle unité de traitement thermique, ou four, est généralement équipée d'une pluralité d'éléments de chauffage agencés pour émettre de la chaleur en direction de préformes en matériau synthétique défilant dans l'unité de traitement thermique en tournant sur elles-mêmes afin d'appliquer un profil de chauffage sur ces préformes et permettre leur déformation ultérieure par exemple par étirage soufflage de sorte à réaliser des récipients à partir des préformes.

Il a par exemple été proposé de prévoir que l'enceinte de l'unité de traitement thermique soit délimitée par deux parois s'étendant le long du trajet des préformes et comprenant chacune des éléments de chauffage émettant de la chaleur dans l'enceinte. Un tel agencement permet d'améliorer la distribution énergétique dans l'enceinte et d'améliorer le rendement d'une unité de traitement thermique. Le document EP 2 782 741 décrit par exemple une telle unité de traitement thermique.

Selon un mode de réalisation, ce document propose de déplacer les préformes sur deux rangées entre les parois de l'enceinte, ce qui permet d'améliorer le rendement de l'unité de traitement thermique et l'application de chaleur sur les préformes tout en limitant l'encombrement de l'unité de chauffage.

Lors du chauffage d'une préforme, il convient toutefois d'éviter de chauffer le col de celle-ci, le col présentant déjà sa forme définitive, c'est-à-dire la forme qu'il présente dans le récipient fini. Il convient donc de ne pas rendre le col malléable en le chauffant avec le corps de la préforme, qui sera déformé ultérieurement lors d'une opération de soufflage.

Cependant, lorsque les préformes circulent sur deux rangées dans l'enceinte, la dispersion du rayonnement émis par les éléments de chauffage fait qu'une partie du rayonnement émis par les éléments chauffants d'une paroi est appliquée sur les cols des préformes de la rangée la plus écartée de cette paroi et entraine donc un chauffage de ces cols.

Pour limiter ce chauffage non souhaité, il peut être prévu de ventiler le col des préformes défilant dans l'enceinte afin de le refroidir. Cependant, une telle ventilation ne permet pas un refroidissement suffisamment ciblé sur le col des préformes et la partie du corps s'étendant immédiatement sous le col risque également d'être refroidie alors qu'il s'agit justement d'une zone critique subissant une déformation importante lors du soufflage des récipients et nécessitant de ce fait un chauffage particulier.

L'un des buts de l'invention est de pallier ces inconvénients en proposant une unité de traitement thermique permettant d'éviter efficacement un chauffage non souhaité des cols des préformes circulant dans l'enceinte de l'unité de traitement thermique.

A cet effet, l'invention concerne une unité de traitement thermique du type précité, comprenant au moins un élément de blocage s'étendant entre la première rangée et la deuxième rangée de sorte à bloquer un rayonnement émis par le premier élément de chauffage vers le deuxième système de préhension et de déplacement et à bloquer un rayonnement émis par le deuxième élément de chauffage vers le premier système de préhension et de déplacement de sorte que les cols des préformes de la première rangée et de la deuxième rangée ne sont pas chauffés par les premier et deuxième éléments de chauffage.

En interposant un élément de blocage entre un élément de chauffage d'une paroi et le système de préhension et de déplacement des préformes de la rangée écartée de cette paroi, le col des préformes de cette rangée n'est pas chauffé du fait de la dispersion du rayonnement de l'élément de chauffage car le système de préhension et de déplacement des préformes coopère avec ce col pour transporter les préformes dans l'enceinte. Ainsi, on évite de façon efficace de chauffer le col des préformes sans avoir à limiter le chauffage de la partie du corps des préformes s'étendant immédiatement sous le col.

L'unité de traitement thermique selon l'invention peut en outre comprendre une ou plusieurs des caractéristiques suivantes, considérées seules ou selon toute combinaison techniquement envisageable :
- l'élément de blocage comprend une première face s'étendant en regard de et parallèlement à la première paroi de l'enceinte et une deuxième face s'étendant en regard et parallèlement à la deuxième paroi de l'enceinte, lesdites première et deuxième faces étant réalisées ou étant revêtues par un matériau absorbant le rayonnement émis par les premier et deuxième éléments de chauffage incident sur lesdites première et deuxième faces ;
- l'élément de blocage comprend en outre une face réfléchissante s'étendant entre la première face et la deuxième face sensiblement perpendiculairement à celles-ci, ladite face réfléchissante étant agencée pour réfléchir le rayonnement émis par les premier et deuxième éléments de chauffage incident sur ladite face réfléchissante vers un corps des préformes de la première rangée et de la deuxième rangée ;
- l'élément de blocage comprend un corps pourvu d'un canal de refroidissement s'étendant selon la direction longitudinale, ledit canal de refroidissement étant en communication fluidique avec une source d'un fluide de refroidissement, ledit fluide de refroidissement circulant dans ledit canal de refroidissement ;
- l'unité de traitement thermique comprend une pluralité de premiers éléments de chauffage répartis au moins selon la direction longitudinale sur la première paroi et une pluralité de deuxièmes éléments de chauffage répartis au moins selon la direction longitudinale sur la deuxième paroi, l'élément de blocage s'étendant selon la direction longitudinale entre l'ensemble de la pluralité de premiers éléments de chauffage et de deuxièmes éléments de chauffage ;
- l'unité de traitement thermique comprend une pluralité de premiers éléments de chauffage répartis au moins selon une direction d'élévation perpendiculaire à la direction longitudinale et à la direction transversale sur la première paroi et une pluralité de deuxièmes éléments de chauffage répartis au moins selon la direction d'élévation sur la deuxième paroi, l'élément de blocage s'étendant selon la direction d'élévation au-dessus ou en dessous de la pluralité de premiers éléments de chauffage et de deuxièmes éléments de chauffage ;
- les premier et deuxième éléments de chauffage comprennent chacun une pluralité de sources de rayonnement électromagnétique monochromatique ou pseudo-monochromatique ;
- les premier et deuxième éléments de chauffage émettent un rayonnement selon la direction transversale avec un angle de divergence inférieur ou égal à 15° autour de la direction transversale ;
- le premier et le deuxième systèmes de préhension et de déplacement sont agencés pour que les préformes de la première rangée et de la deuxième rangée sont décalées en quinconce selon la direction longitudinale les unes par rapport aux autres ; et
- les première et deuxième parois de l'enceinte et l'élément de blocage sont mobiles selon une direction d'élévation, perpendiculaire aux directions longitudinale et transversale, par rapport au premier et au deuxième systèmes de préhension et de déplacement des préformes.

D'autres aspects et avantages de l'invention apparaîtront plus clairement à la lecture de la description qui va suivre, donnée uniquement à titre d'exemple non limitatif, et faite en référence aux dessins annexés dans lesquels :
[Fig. 1] est une représentation schématique de dessus d'une partie d'une installation de production de récipients comprenant une unité de traitement thermique selon l'invention,
[Fig.2] est une représentation schématique de dessus d'une partie d'un tronçon de chauffage de l'unité de traitement thermique de la [Fig.1], dans laquelle les préformes circulent sur deux rangées, et
[Fig.3] est une représentation schématique en coupe de l'unité de traitement thermique de la [Fig.2].

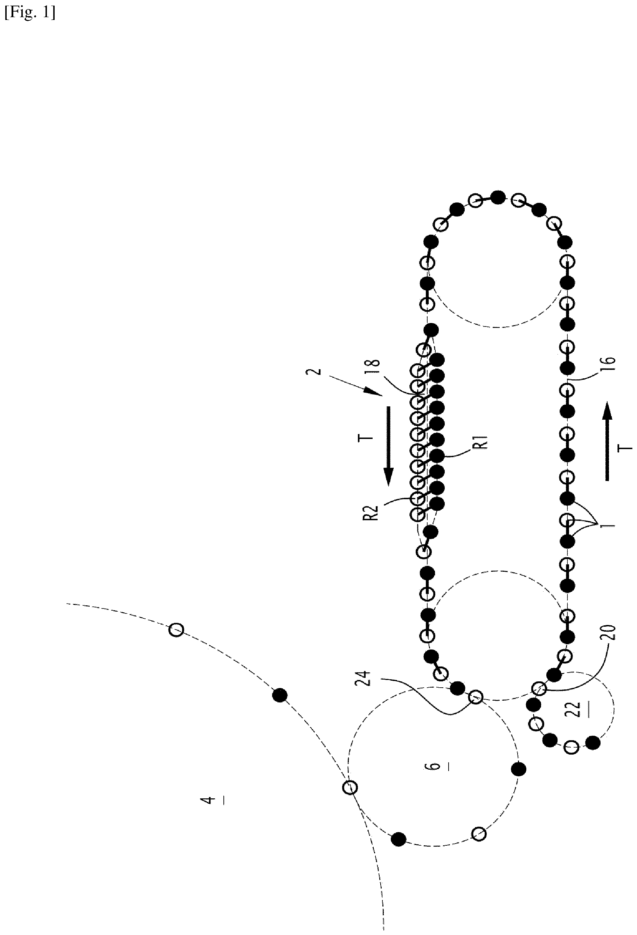

En référence à la [Fig.1], on décrit une installation de production de récipients à partir d'une succession de préformes 1.

Une telle installation comprend généralement au moins une unité de traitement thermique 2 agencée pour chauffer les préformes 1 et une station de formage 4 dans laquelle les préformes 1 chauffées sont formées en récipients, par exemple par étirage soufflage. Comme représenté sur la [Fig.1], une roue de transfert 6 est par exemple prévue entre l'unité de traitement thermique 2 et la station de formage 4 pour transférer les préformes 1 chauffées en sortie de l'unité de traitement thermique 2 à une entrée de la station de formage 4, qui est par exemple formée par un carroussel portant plusieurs unités de formage, chacune agencée pour former un récipient à partir d'une préforme 1 chauffée pendant la rotation du carroussel. En dehors de l'unité de traitement thermique 2 qui va à présent être décrite plus en détail, une telle installation de production de récipient est connue en soi et ne sera pas décrit plus en détail ici.

L'unité de traitement thermique 2, ou four, est agencée pour chauffer une succession de préformes 1 circulant dans l'unité de traitement thermique afin d'appliquer un profil thermique sur chaque préforme 1 pour la rendre malléable en vue de sa déformation ultérieure dans la station de formage 4.

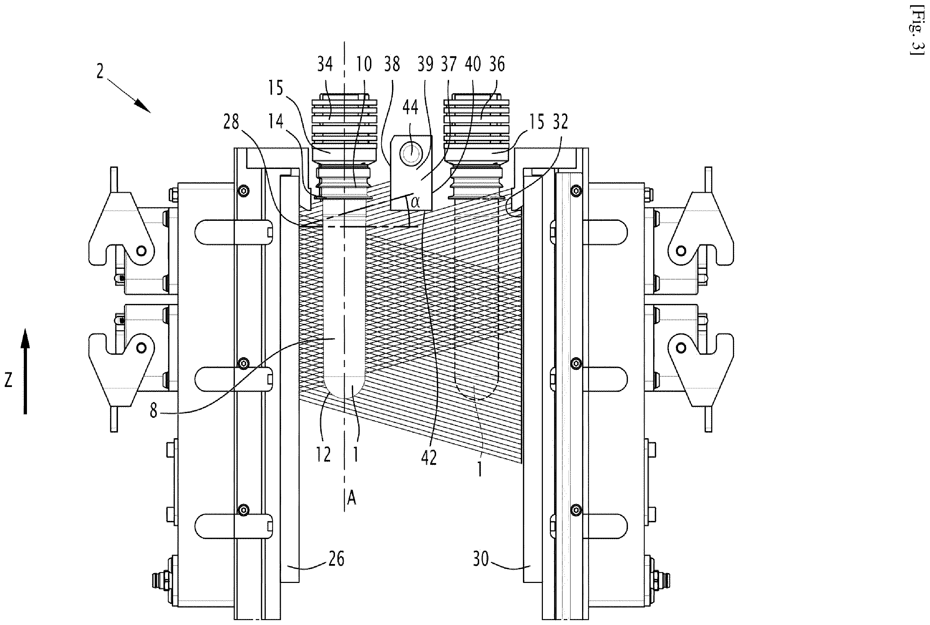

Plus particulièrement, comme représenté sur la [Fig.3], chaque préforme 1 comprend un corps 8 et un col 10 et l'unité de traitement thermique 2 est agencée pour chauffer le corps 8 sans chauffer le col 10 de chaque préforme 1, comme cela sera décrit plus en détail ultérieurement. Le corps 8 s'étend selon un axe A et présente par exemple la forme d'un tube à essai s'étendant entre un fond 12 et le col 10, qui forme une extrémité ouverte du tube à essai. Le col 10 comprend par exemple une collerette 14 s'étendant d'un plan radial sensiblement perpendiculaire à l'axe A en saillie vers l'extérieur du corps 8. Une telle collerette 14 forme par exemple une surface de préhension de la préforme 1 et du récipient réalisé à partir de la préforme 1. La partie de la préforme 1 s'étendant à partir de la collerette 14 jusqu'à l'extrémité ouverte comprend par exemple un filetage permettant de fixer un bouchon sur le récipient réalisé à partir de la préforme 1. Ainsi, le col 10 de la préforme 1 présente la même forme que le col du récipient réalisé à partir de cette préforme 1. C'est pourquoi, il convient de ne pas chauffer le col 10 de la préforme 1 dans l'unité de traitement thermique 2 afin d'éviter toute déformation du col 10. En outre, le fait de maintenir le col 10 froid et rigide permet de fournir une zone de préhension indéformable de la préforme 1 pour la déplacer dans l'installation de production de récipients, notamment dans l'unité de traitement thermique 2 comme cela va à présent être décrit.

L'unité de traitement thermique 2 comprend un système de préhension et de déplacement d'une succession de préformes 1 permettant de saisir les préformes 1 par le col 10 et de déplacer celles-ci dans l'unité de traitement thermique selon un trajet de circulation T prédéfini s'étendant selon une direction longitudinale. Le système de préhension de déplacement comprend une pluralité d'éléments de préhension 15 disposés les uns à la suite des autres selon le trajet de circulation T, chaque élément de préhension 15 étant agencé pour coopérer avec le col 10 d'une préforme 1. Selon un mode de réalisation, les éléments de préhension 15 sont en outre agencé pour faire tourner les préformes 1 autour de leur axe A lorsqu'elles sont transportées dans l'unité de traitement thermique 2. Selon un mode de réalisation, chaque élément de préhension 15 comprend un pion sur lequel le col 10 d'une préforme 1 est emmanché par son extrémité ouverte, le pion étant mobile en rotation pour faire tourner la préforme autour de son axe A. Un tel élément de préhension 15 est connu sous le nom de « tournette ».

Lorsque les préformes 1 sont dans l'unité de traitement thermique 2 leur axe A s'étend selon une direction d'élévation Z de l'unité de traitement thermique 2, comme représenté sur la [Fig.3], la direction d'élévation Z étant sensiblement perpendiculaire à la direction longitudinale.

Selon le mode de réalisation représenté sur la [Fig.1], l'unité de traitement thermique 2 comprend un tronçon de transport 16, dans lequel les préformes 1 sont déplacées les unes à la suite des autres sur une seule rangée selon la direction longitudinale, et un tronçon de chauffage 18, dans lequel les préformes 1 sont déplacées sur deux rangées R1, R2 parallèles et s'étendant selon la direction longitudinale, comme cela va être décrit plus en détail ultérieurement. Les préformes 1 circulent dans l'unité de traitement thermique 2 à partir d'un point d'entrée 20, auquel elles sont amenées par exemple par une roue de transport 22, dans le tronçon de transport 16 puis dans le tronçon de chauffage 18 jusqu'à un point de sortie 24, où les préformes 1 chauffées sont récupérées par la roue de transfert 6 pour être amenées à la station de formage 4. Selon le mode de réalisation représenté sur la [Fig.1], le système de préhension et de déplacement forme une boucle entre le tronçon de transport 16 et le tronçon de chauffage 18, c'est-à-dire que les éléments de préhension 15 libérés des préformes qu'ils transportaient au point de sortie 24 retournent au point d'entrée 20 pour récupérer de nouvelles préformes à chauffer.

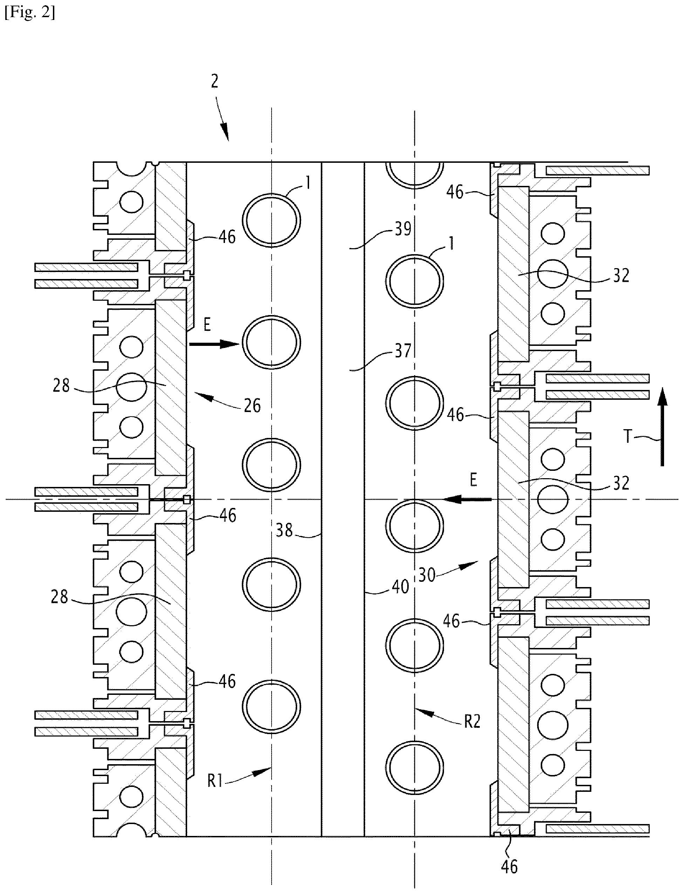

Dans la suite de la description, seul le tronçon de chauffage 18 sera décrit plus en détail en référence aux Figures. 2 et 3, le reste de l'unité de traitement thermique 2 étant connu.

Au moins dans le tronçon de chauffage 18, l'unité de traitement thermique 2 comprend une première paroi 26, comprenant au moins un premier élément de chauffage 28, et une deuxième paroi 30, comprenant au moins un deuxième élément de chauffage 32. Les première et deuxième parois 26, 30 sont opposées de part et d'autre de l'unité de traitement thermique 2 et définissent entre elles une enceinte au sein de laquelle circulent les préformes 1 selon le trajet de circulation T prédéfini sur deux rangées R1 et R2. Les première et deuxième parois 26, 30 sont espacées l'une de l'autre selon une direction transversale sensiblement perpendiculaire à la direction longitudinale et à la direction d'élévation Z de sorte à s'étendre de part et d'autre du trajet de circulation T. La hauteur des première et deuxième parois 26, 30 est définie selon la direction d'élévation Z.

Afin de déplacer les préformes 1 sur deux rangées R1 et R2 écartées l'une de l'autre selon la direction transversale, le système de préhension et de déplacement se sépare dans le tronçon de chauffage 18 en un premier système de préhension et de déplacement 34 déplaçant une première pluralité de préformes 1 sur la première rangée R1 selon la direction longitudinale et en un deuxième système de préhension et de déplacement 36 déplaçant une deuxième pluralité de préformes sur la deuxième rangée R2 selon la direction longitudinale. A l'entrée du tronçon de chauffage 18, le système de préhension et de déplacement est par exemple agencé pour qu'une préforme sur deux passe sur la première rangée R1, les autres préformes passant sur la deuxième rangée R2. En sortie du tronçon de chauffage 18, les préformes 1 sont par exemple regroupées sur une seule rangée jusqu'au point de sortie 24 de l'unité de traitement thermique 2, comme représenté sur la [Fig.1].

La première rangée R1 est adjacente à la première paroi 26 et la deuxième rangée R2 est adjacente à la deuxième paroi 30. En d'autres termes, les préformes 1 déplacées sur la première rangée R1 sont plus proches, selon la direction transversale, de la première paroi 26 que de la deuxième paroi 30 et les préformes déplacées sur la deuxième rangée R2 sont plus proches, selon la direction transversale, de la deuxième paroi 30 que de la première paroi 26. Selon un mode de réalisation, Les premier et deuxième systèmes de préhension et de déplacement 34, 36 sont avantageusement agencées pour que les préformes 1 soient disposées en quinconce dans l'enceinte. Par en quinconce, on entend que les préformes 1 d'une rangée R1 sont décalées selon la direction longitudinale par rapport aux préformes 1 de l'autre rangée R2. Un tel agencement en quinconce permet d'assurer que les préformes 1 de la première rangée R1 sont également exposées au rayonnement émis par le deuxième élément de chauffage 32 entre deux préformes 1 de la deuxième rangée R2 et que les préformes 1 de la deuxième rangée R2 sont également exposées au rayonnement émis par le premier élément de chauffage 28 entre deux préformes 1 de la première rangée R1. Ainsi, le chauffage des préformes 1 des deux rangées R1, R2 est uniforme. L'écartement selon la direction transversale entre les rangées R1, R2, et l'écartement selon la direction longitudinale entre les préformes 1 peuvent être ajustés en fonction notamment du diamètre des préformes 1.

Le premier élément de chauffage 28 et le deuxième élément de chauffage 32 sont par exemple associés l'un à l'autre pour former une paire d'élément de chauffage. Comme cela décrit plus en détail ultérieurement, l'unité de traitement thermique 2 comprend par exemple plusieurs paires d'éléments de chauffage, formées chacune d'un premier élément de chauffage 28 s'étendant sur la première paroi 26 et d'un deuxième élément de chauffage 32 s'étendant sur la deuxième paroi 30. Les premier et deuxième éléments de chauffage 28, 32 s'étendent au moins en partie l'un en regard de l'autre de part et d'autre de l'enceinte. Par « s'étendent au moins en partie l'un en regard de l'autre de part et d'autre de l'enceinte », on entend que les premier et deuxième éléments de chauffage 28, 32 s'étendent sensiblement à une même hauteur selon la direction d'élévation Z et au moins en partie l'un en face de l'autre selon la direction transversale. Selon un mode de réalisation représenté sur la [Fig.2], les premier et deuxième éléments de chauffage 28, 32 d'une paire d'élément de chauffage sont toutefois décalés l'un par rapport à l'autre selon la direction longitudinale de sorte que le deuxième élément de chauffage 32 ne s'étend qu'en partie en regard du premier élément de chauffage 28. Un tel mode de réalisation est par exemple décrit dans le document EP 2 782 741 et l'homme du métier pourra se référer à ce document pour obtenir plus de détail sur un tel mode de réalisation, notamment en termes de dimensionnement et de positionnement des éléments de chauffage les uns par rapport aux autres.

Le premier élément de chauffage 28 et le deuxième élément de chauffage 32 d'une paire d'éléments de chauffage sont identiques. Ainsi, seul le premier élément de chauffage 28 va à présent être décrit plus en détail.

Le premier élément de chauffage 28 comprend par exemple une pluralité de sources de rayonnement électromagnétique monochromatique ou pseudo-monochromatique. Plus particulièrement, le premier élément de chauffage 28 est par exemple un émetteur laser et les sources de rayonnement sont des puces laser agencées pour émettre un rayonnement laser dans le domaine de l'infrarouge selon une direction d'émission E sensiblement parallèle à la direction transversale. Les sources de rayonnement sont par exemple agencées les unes à côté des autres sur un support de sorte à former au moins une rangée de sources de rayonnement s'étendant selon la direction longitudinale. Selon un mode de réalisation, les sources de rayonnement forment au moins une rangée supérieure et au moins une rangée inférieure disposées l'une au-dessus de l'autre selon la direction d'élévation. Les sources de rayonnement sont connectées électriquement en série les unes aux autres entre une borne de connexion positive et une borne de connexion négative.

De tels éléments de chauffage sont par exemple décrits dans le document FR 3 124 030 et l'homme du métier pourra se référer à ce document pour obtenir plus de détail, notamment en ce qui concerne la structure de chaque source de rayonnement, l'agencement des sources de rayonnement sur un support, la connexion des sources de rayonnement entre elles et le refroidissement des éléments de chauffage. Il est entendu que l'invention n'est pas limitée à des éléments de chauffage formés par des émetteurs laser et s'applique également à d'autres types d'élément de chauffage, tels que des lampes tubulaires à incandescence de type halogène.

Il convient de noter que le rayonnement émis par un tel élément de chauffage n'est pas strictement rectiligne et présente une certaine divergence. Plus particulièrement, le rayonnement émis par chaque source de rayonnement présente plutôt la forme d'un cône dont l'angle α au sommet est par exemple inférieur ou égal à 15°. De tels rayonnements divergents émis par plusieurs sources de rayonnement sont représentés sur la [Fig.3] par les différentes lignes obliques allant d'une paroi à l'autre de l'enceinte. Ainsi, les rayonnements émis par les éléments de chauffage disposés en regard des parties supérieures des corps 8 des préformes 1, adjacentes aux cols 10 des préformes 1, sont susceptibles de frapper les cols 10 des préformes 1 situées dans la rangée la plus éloignée de ces éléments de chauffage du fait de la divergence des éléments de chauffage. Ainsi, par exemple, le rayonnement émis par un premier élément de chauffage 28, situé en regard de la partie supérieure du corps 8 des préformes 1 situées sur la première rangée R1, est susceptible de frapper le col 10 des préformes 1 situées sur la deuxième rangée R2, comme on peut le constater sur la [Fig.3]. De même, le rayonnement émis par un deuxième élément de chauffage 32, situé en regard de la partie supérieure du corps 8 des préformes 1 situées sur la deuxième rangée R2, est susceptible de frapper le col 10 des préformes 1 situées sur la première rangée R1. Ainsi, le col 10 des préformes 1 est susceptible d'être chauffé dans le tronçon de chauffage 18 alors que cela n'est pas souhaitable.

Afin d'éviter ce chauffage non souhaité, l'unité de traitement thermique 2 selon l'invention comprend au moins un élément de blocage 37 du rayonnement émis par les premier et deuxième éléments de chauffage 28, 32 vers les cols 10 des préformes 1 situées dans l'enceinte. Plus particulièrement, l'élément de blocage 37 est disposé entre les deux rangées R1, R2 selon la direction transversale en regard des premier et deuxième systèmes de préhension et de déplacement 34, 36 des préformes 1, plus particulièrement en regard des pions des éléments de préhension 15, c'est-à-dire en regard des cols 10 emmanchés sur ces pions lorsque des préformes 1 circulent dans le tronçon de chauffage 18 de sorte à protéger ces cols 10 des rayonnements émis par les premier et deuxième éléments de chauffage 28, 32.

Ainsi, selon un aspect, l'invention concerne également un élément de blocage 37 d'un rayonnement émis par un élément de chauffage comprenant un corps 39 comprenant une première face 38 et une deuxième face 40 réalisées en ou étant revêtues par un matériau absorbant le rayonnement émis l'élément de chauffage. La première face 38 s'étend en regard de la première paroi 26 sensiblement parallèlement à celle-ci et la deuxième face 40 s'étend en regard de la deuxième paroi 30 sensiblement parallèlement à celle-ci, à une extrémité inférieure ou supérieure de ces première et deuxième parois 26, 30 selon la direction d'élévation Z. En effet, lorsque les préformes 1 circulent dans l'enceinte, leur col 10 s'étend en regard d'une des extrémités des première et deuxième paroi 26, 30 selon la direction d'élévation Z. L'extrémité en regard de laquelle s'étendent les cols 10 dépend de la façon dont sont transportées les préformes 1. Si elles sont transportées « la tête en haut » comme représenté sur la [Fig.3], le col 10 des préformes et le corps 39 de l'élément de blocage 37 s'étendent en regard de l'extrémité supérieure des première et deuxième parois 26, 30 selon la direction d'élévation Z. Si les préformes 1 sont transportées « la tête en bas », le col 10 des préformes et le corps 39 de l'élément de blocage 37 s'étendent en regard de l'extrémité inférieure des première et deuxième parois 26, 30 selon la direction d'élévation Z. Ainsi, la première face 38 s'étend dans le trajet du rayonnement émis par un premier élément de chauffage 28 disposé en regard de la partie supérieure du corps 8 des préformes 1, comme on peut le constater par le rayonnement interrompu par la première face 38 sur la [Fig.3], et la deuxième face 40 s'étend dans le trajet du rayonnement émis par un deuxième élément de chauffage 32 disposé en regard de la partie supérieure du corps 8 des préformes 1. Selon un mode de réalisation, les première et deuxième faces 38, 40 sont peintes en noir pour absorber le rayonnement émis par les premier et deuxième éléments de chauffage 28, 32.

Selon un mode de réalisation, le corps 39 comprend en outre une face réfléchissante 42 s'étendant entre la première face 38 et la deuxième face 40, sensiblement perpendiculairement à celles-ci à une extrémité du corps 39 selon la direction d'élévation Z. Comme représenté sur la [Fig.3], la face réfléchissante 42 est orientée vers le fond 12 des préformes 1 circulant dans l'enceinte de sorte à réfléchir le rayonnement émis par les premier et deuxième éléments de chauffage 28, 32 et incident sur la face réfléchissante 42 vers le corps 8 des préformes 1 de la première rangée R1 et de la deuxième rangée R2. Ainsi, une partie du rayonnement émis par les premier et deuxième éléments de chauffage 28, 32 orienté vers l'élément de blocage 37 du fait de la divergence de ce rayonnement peut être renvoyé vers le corps 8 des préformes 1, ce qui améliore la puissance de chauffage de ces éléments de chauffage en réduisant la perte de rayonnement due à la divergence. Selon l'extrémité des première et deuxième parois 26, 30 en regard de laquelle s'étend l'élément de blocage 37, la face réfléchissante 42 forme une face inférieure (lorsque l'élément de blocage 37 s'étend en regard de l'extrémité supérieure des parois, comme représenté sur la [Fig.3]) ou une face supérieure (lorsque l'élément de blocage 37 s'étend en regard de l'extrémité inférieure des parois) du corps 39 de l'élément de blocage 37. Le caractère réfléchissant de la paroi réfléchissante 42 est par exemple obtenu en polissant la face inférieure ou supérieure du corps 39 de l'élément de blocage 37 jusqu'à obtenir un poli miroir.

Selon un mode de réalisation, l'élément de blocage 37 comprend en outre un canal de refroidissement 44 s'étendant dans le cops 39 et en communication fluidique avec une source d'un fluide de refroidissement (non représentée). Le fluide de refroidissement circule dans le canal de refroidissement 44 de sorte à dissiper la chaleur absorbée par les première et deuxième faces 38, 40 du corps 39 de l'élément de blocage 37 sous l'effet du rayonnement divergent des premier et deuxième éléments de chauffage 28, 32. Selon des variantes, le fluide de refroidissement est le même ou est différent du fluide de refroidissement utilisé pour refroidir, de façon connue, les premier et deuxième éléments de chauffage 28, 32. Selon un mode de réalisation, le fluide de refroidissement circulant dans le canal de refroidissement 44 est de l'eau glycolée. Le canal de refroidissement 44 s'étend sur toute la longueur du corps 39 selon la direction longitudinale.

Comme décrit précédemment, l'enceinte comprend une pluralité de premiers et deuxièmes éléments de chauffage 28, 32 répartis dans l'enceinte pour exposer l'ensemble du tronçon de chauffage 18, en dehors de la zone dans laquelle s'étendent les cols 10 des préformes 1, à la chaleur émise par les éléments de chauffage. Ainsi, les premiers éléments de chauffage 28 sont par exemple répartis au moins selon la direction longitudinale sur la première paroi 26 et les deuxièmes éléments de chauffage 32 sont par exemple répartis au moins selon la direction longitudinale sur la deuxième paroi 30, les premier et deuxième éléments de chauffage 28, 32 d'une paire d'éléments de chauffage s'étendant au moins en partie en regard l'un de l'autre selon la direction transversale. En variante ou en complément, les premiers éléments de chauffage 28 sont par exemple répartis au moins selon la direction d'élévation Z sur la première paroi 26 et les deuxièmes éléments de chauffage 32 sont par exemple répartis selon la direction d'élévation Z sur la deuxième paroi 30, les premier et deuxième éléments de chauffage 28, 32 d'une paire d'éléments de chauffage s'étendant au moins en partie en regard l'un de l'autre selon la direction transversale.

Lorsque les premier et deuxième éléments de chauffage 28, 32 d'une paire d'éléments de chauffage sont décalés l'un par rapport à l'autre selon la direction longitudinale, le premier élément de chauffage 28 s'étend au moins en partie en regard d'une section réfléchissante 46 de la deuxième paroi 30 et le deuxième élément de chauffage 32 s'étend en regard d'une section réfléchissante 46 de la première paroi 26, comme représenté sur la [Fig.2]. Les sections réfléchissantes 46 s'étendent par exemple entre des colonnes d'élément de chauffage adjacentes de sorte que la première et la deuxième parois 26, 30 sont à la fois émettrices de chaleur et réfléchissantes de la chaleur. Comme indiqué précédemment, un tel agencement d'unité de traitement thermique 2 est déjà connu en soi et ne sera pas décrit plus en détail ici. L'homme du métier peut se référer au document EP 2 782 741.

Dans ce cas, l'élément de blocage 37 s'étend avantageusement selon la direction longitudinale entre toutes les paires de premier et deuxième éléments de chauffage 28, 32 réparties selon la direction longitudinale, c'est-à-dire dans tout le tronçon de chauffage 18 selon la direction longitudinale. En variante ou en complément, l'élément de blocage 37 s'étend en regard d'une partie de la paire supérieure ou inférieure de premier et deuxième éléments de chauffage 28, 32 ou au-dessus ou en dessous de cette paire selon la direction d'élévation Z de sorte à ne bloquer que la partie du rayonnement orientée vers le col 10 des préformes 1.

Selon un mode de réalisation, l'ensemble formé par les première et deuxième parois 26, 30 et l'élément de blocage 37 est déplaçable selon la direction d'élévation Z par rapport au premier et au deuxième systèmes de préhension 34, 36 et de déplacement des préformes afin d'adapter la position de cet ensemble aux différents modèles de préformes 1 susceptibles de circuler dans l'enceinte, notamment aux différentes hauteurs de ces préformes 1. Selon un mode de réalisation, les première et deuxième parois 26, 30 et l'élément de blocage 37 sont mobiles ensemble selon la direction d'élévation Z de sorte que la modification de la position de l'un des éléments de cet ensemble entraîne la modification de la position des autres éléments de cet ensemble. En variante, l'élément de blocage 37 est mobile indépendamment des première et deuxième parois 26, 30, c'est-à-dire que la position de l'élément de blocage 37 peut être réglée indépendamment de celle des première et deuxième parois 26, 30.

L'élément de blocage 37 décrit-dessus permet d'éviter efficacement le chauffage du col 10 des préformes 1 dans le tronçon de chauffage 18 sans nécessiter une ventilation spécifique pour les cols 10 et sans avoir à réduire la puissance de chauffage fournie à la zone supérieure du corps 8 des préformes 1 adjacente au col 10. Cela est particulièrement avantageux car la zone supérieure du corps 8 d'une préforme 1 est généralement une zone devant subir une forte déformation lors de la production d'un récipient. En effet, cette zone forme généralement un évasement ou un épaulement du récipient dans lequel le diamètre du récipient augmente pour faire une transition entre le col et le reste du corps du récipient. Ainsi, il est primordial que cette zone soit efficacement chauffée afin de maitriser une telle déformation.

## Revendications

1. Unité de traitement thermique de préformes (1) d'une installation de fabrication de récipients, l'unité de traitement thermique comprenant :
- une enceinte délimitée par une première paroi (26) et une deuxième paroi (30) s'étendant de part et d'autre de l'enceinte selon une direction transversale, la première paroi (26) comprenant au moins un premier élément de chauffage (28) et la deuxième paroi (30) comprenant au moins un deuxième élément de chauffage (32),
- un premier système de préhension et de déplacement (34) d'une première pluralité de préformes (1) sur une première rangée (R1) adjacente à la première paroi (26), ledit premier système de préhension et de déplacement (34) étant agencé pour coopérer avec un col (10) de chaque préforme (1) de la première pluralité de préformes (1) pour déplacer lesdites préformes selon un trajet de circulation (T) prédéfini s'étendant selon une direction longitudinale, sensiblement perpendiculaire à la direction transversale,
- un deuxième système de préhension et de déplacement (36) d'une deuxième pluralité de préformes (1) sur une deuxième rangée (R2) adjacente à la deuxième paroi (30), ledit deuxième système de préhension et de déplacement (36) étant agencé pour coopérer avec un col (10) de chaque préforme (1) de la deuxième pluralité de préformes (1) pour déplacer lesdites préformes (1) selon le trajet de circulation (T),
- l'unité de traitement thermique étant **caractérisée en ce qu'**elle comprend au moins un élément de blocage (37) s'étendant entre la première rangée (R1) et la deuxième rangée (R2) de sorte à bloquer un rayonnement émis par le premier élément de chauffage (28) vers le deuxième système de préhension et de déplacement (36) et à bloquer un rayonnement émis par le deuxième élément de chauffage (32) vers le premier système de préhension et de déplacement (34) de sorte que les cols (10) des préformes (1) de la première rangée (R1) et de la deuxième rangée (R2) ne sont pas chauffés par les premier et deuxième éléments de chauffage (28, 32).

2. Unité de traitement thermique selon la revendication 1, dans laquelle l'élément de blocage (37) comprend une première face (38) s'étendant en regard de et parallèlement à la première paroi (26) de l'enceinte et une deuxième face (40) s'étendant en regard et parallèlement à la deuxième paroi (30) de l'enceinte, lesdites première et deuxième faces (38, 40) étant réalisées ou étant revêtues par un matériau absorbant le rayonnement émis par les premier et deuxième éléments de chauffage (28, 32) incident sur lesdites première et deuxième faces (38, 40).

3. Unité de traitement thermique selon la revendication 2, dans laquelle l'élément de blocage (37) comprend en outre une face réfléchissante (42) s'étendant entre la première face (38) et la deuxième face (40) sensiblement perpendiculairement à celles-ci, ladite face réfléchissante (42) étant agencée pour réfléchir le rayonnement émis par les premier et deuxième éléments de chauffage (28, 32) incident sur ladite face réfléchissante (42) vers un corps (8) des préformes (1) de la première rangée (R1) et de la deuxième rangée (R2).

4. Unité de traitement thermique selon l'une quelconque des revendications 1 à 3, dans laquelle l'élément de blocage (37) comprend un corps (39) pourvu d'un canal de refroidissement (44) s'étendant selon la direction longitudinale, ledit canal de refroidissement (44) étant en communication fluidique avec une source d'un fluide de refroidissement, ledit fluide de refroidissement circulant dans ledit canal de refroidissement (44).

5. Unité de traitement thermique selon l'une quelconque des revendications 1 à 4, comprenant une pluralité de premiers éléments de chauffage (28) répartis au moins selon la direction longitudinale sur la première paroi (26) et une pluralité de deuxièmes éléments de chauffage (32) répartis au moins selon la direction longitudinale sur la deuxième paroi (30), l'élément de blocage (37) s'étendant selon la direction longitudinale entre l'ensemble de la pluralité de premiers éléments de chauffage (28) et de deuxièmes éléments de chauffage (32).

6. Unité de traitement thermique selon l'une quelconque des revendications 1 à 5, comprenant une pluralité de premiers éléments de chauffage (28) répartis au moins selon une direction d'élévation (Z) perpendiculaire à la direction longitudinale et à la direction transversale sur la première paroi (26) et une pluralité de deuxièmes éléments de chauffage (32) répartis au moins selon la direction d'élévation (Z) sur la deuxième paroi (30), l'élément de blocage (37) s'étendant selon la direction d'élévation (Z) au-dessus ou en dessous de la pluralité de premiers éléments de chauffage (28) et de deuxièmes éléments de chauffage (32).

7. Unité de traitement thermique selon l'une quelconque des revendications 1 à 6, dans laquelle les premier et deuxième éléments de chauffage (28, 32) comprennent chacun une pluralité de sources de rayonnement électromagnétique monochromatique ou pseudo-monochromatique.

8. Unité de traitement thermique selon l'une quelconque des revendications 1 à 7, dans laquelle les premier et deuxième éléments de chauffage (28 ; 32) émettent un rayonnement selon la direction transversale avec un angle de divergence (α) inférieur ou égal à 15° autour de la direction transversale.

9. Unité de traitement thermique selon l'une quelconque des revendications 1 à 8, dans laquelle le premier et le deuxième systèmes de préhension et de déplacement (34, 36) sont agencés pour que les préformes (1) de la première rangée (R1) et de la deuxième rangée (R2) sont décalées en quinconce selon la direction longitudinale les unes par rapport aux autres.

10. Unité de traitement thermique selon l'une quelconque des revendications 1 à 9, dans laquelle les première et deuxième parois (26, 30) de l'enceinte et l'élément de blocage (37) sont mobiles selon une direction d'élévation (Z), perpendiculaire aux directions longitudinale et transversale, par rapport au premier et au deuxième systèmes de préhension et de déplacement des préformes (34, 36).
